# EUROPEAN PATENT APPLICATION

(11) **EP 1 889 819 A1**
(43) Date of publication of application: **20.02.2008**
(21) Application number: 06017251.7
(22) Date of filing: 18.08.2006
(51) Int. Cl.: C03C 25/32, C08J 5/08, C08L 77/12, D04H 1/64

(54) **Binder for mineral fibres**

(71) Applicant: Rockwool International A/S, 2640 Hedehusene (DK)
(72) Inventor: Mads, Gudik-Sorensen, 4000 Roskilde (DK)
(74) Representative: Barz, Peter

(57) **Abstract**

An aqueous binder composition for mineral fibres comprises a water-soluble binder component obtainable by reacting glycerol and at least one alkanolamine with at least one carboxylic anhydride in proportions such that the ratio of equivalents of amine groups plus hydroxy groups (NH+OH) to equivalents of carboxy groups (COOH) in the binder component is within the range of about 0.4 to 2.0, glycerol being used in an amount such that the equivalent ratio of glycerol OH groups to total equivalents of amine groups plus hydroxy groups (NH+OH) is 0.1 to 0.9, and, optionally, treating the reaction product with a base.

## Description

### Field of the Invention

The present invention relates to an aqueous binder for mineral fibre products having improved ageing properties, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol/formaldehyde resins which can be economically produced and can be extended with urea prior to use as a binder. However, the desire to minimize Volatile Organic Compound (VOC) emissions from products in conjunction with existing and proposed legislation directed to the lowering or elimination of formaldehyde have led to the development of formaldehyde-free binders such as, for instance, the binder compositions based on polycarboxy polymers and polyols, as disclosed in EP-A-583086, EP-A-990727 and US-A-5,318,990.

Another group of non-phenol/formaldehyde binders for mineral fibres are the addition/elimination reaction products of aliphatic and/or aromatic anhyrides with alkanolamines, e.g., as disclosed in WO 99/36368, WO 01/05725, WO 01/96460, WO 02/06178, WO 2004/007615 and WO 2006/061249. These mineral fibre binders are water soluble and exhibit excellent binding properties in terms of curing speed and curing density. Still, depending on the field of application, the ageing properties and, in particular, the mechanical strength remaining after ageing of mineral fibre products bonded with such binders has remained an application property attracting continuous attention.

### Summary of the Invention

Accordingly, it was an object of the present invention to provide an aqueous binder composition which is particularly suitable for bonding mineral fibres, which exhibits excellent binding characteristics in terms of curing speed and strength, has good water solubility and dilutability and is capable of providing markedly improved ageing properties.

A further object of the present invention was to provide a mineral fibre product bonded with the cured binder composition and exhibiting improved ageing properties.

In accordance with a first aspect of the present invention, there is provided an aqueous binder composition comprising a water-soluble binder component obtainable by
reacting glycerol and at least one alkanolamine with at least one carboxylic anhydride in proportions such that the ratio of equivalents of amine groups plus hydroxy groups (NH+OH) to equivalents of carboxy groups (COOH) in the binder component is within the range of about 0.4 to 2.0, glycerol being used in an amount such that the equivalent ratio of glycerol OH groups to total equivalents of amine groups plus hydroxy groups (NH+OH) is 0.1 to 0.9,
and, optionally, treating the reaction product with a base.

In accordance with a second aspect of the present invention, there is provided a method of producing a bonded mineral fibre product which comprises the steps of contacting the mineral fibres or mineral fibre product with an aqueous binder composition as defined above, and curing the binder composition.

In accordance with a third aspect of the present invention, there is provided a mineral fibre product comprising mineral fibres in contact with the cured binder composition defined above.

Mineral fibre products produced from the aqueous binder composition according to the present invention exhibit improved ageing properties and, in particular, higher mechanical strength remaining after ageing.

### Description of the Preferred Embodiments

The formaldehyde-free aqueous binder composition according to the present invention comprises a water-soluble binder component obtainable by
reacting glycerol and at least one alkanolamine with at least one carboxylic anhydride in proportions such that the ratio of equivalents of amine groups plus hydroxy groups (NH+OH) to equivalents of carboxy groups (COOH) in the binder component is within the range of about 0.4 to 2.0, glycerol being used in an amount such that the equivalent ratio of glycerol OH groups to total equivalents of amine groups plus hydroxy groups (NH+OH) is 0.2 to 0.9,
and, optionally, treating the reaction product with a base.

### Binder Component

The binder component of the aqueous binder composition according to the present invention comprises the water-soluble reaction product of glycerol and an alkanolamine with a carboxylic anhydride.

Preferred alkanolamines for use in the preparation of binder component are alkanolamines having at least two hydroxy groups such as, for instance, alkanolamines represented by the formula 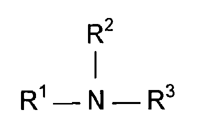 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

In the preparation of the binder component, the proportion of the glycerol, alkanolamine and carboxylic anhydride reactants is selected such that the ratio of equivalents of amine plus hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a nonuniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the binder component is preferably adjusted to 2.0 or less, more preferably to 1.7 or less. In general, the binder component has an equivalent ratio of (NH+OH) / (COOH) within the range of from 1.25 to 1.55.

Glycerol is used in the reaction in an amount such that the equivalent ratio of glycerol OH groups to total equivalents of amine groups plus hydroxy groups (NH+OH) is 0.2 to 0.9, preferably 0.3 to 0.8 and, more preferably, 0.5 to 0.8.

The reaction between the glycerol, alkanolamine and carboxylic anhydride reactants is carried out in the usual manner, for instance, as described in WO 99/36368, WO 01/05725, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, glycerol and the alkanolamine are first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6-7. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA). The base is preferably added to the reaction mixture after the reaction between glycerol, the alkanol amine and the carboxylic anhydride(s) has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

### Additives

The binder composition according to the present invention may comprise one or more conventional binder additives.

These include, for instance, silanes such as, e.g., y-aminopropyltriethoxysilane, curing accelerators such as, e.g., β-hydroxylalkylamides; the free acid and salt forms of phosphoric acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, phosphonic or phosphinic acid. Other suitable binder additives are thermal stabilizers; UV stabilizers; hydrolytic stability-improving agents such as monoalkanolamines, allylamines, peroxy compounds, epoxy compounds, compounds having at least one long-chain aliphatic moiety and at least one functional group, and SBR latices; surface active agents; fillers such as clay, silicates, and magnesium sulfate; pigments such as titanium dioxide; hydrophobizing agents such as fluorinated compounds, mineral oils and silicone oils; flame retardants; corrosion inhibitors; urea; silica; magnesium hydroxide and others.

These binder additives and adjuvants are used in conventional amounts generally not exceeding 20 % by weight of the binder solids. The amount of curing accelerator in the binder composition is generally between 0.05 to 5 wt.%, based on solids, and also the amount of silanes is generally between 0.05 to 5 wt.%.

If appropriate, co-binders such as, e.g., carbohydrates may be employed in amounts of, for instance, up to 25-30 wt.%, based on binder solids.

### Final Binder Composition

The binder composition according to the present invention preferably has a solids content of from 10 to 40 wt.%. This is often the concentration range of the binder in storage containers before use.

In a form ready for application, the binder preferably has a solids content of from 1 to 30 wt.%.

For transportion, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

### Mineral fibre product

The formaldehyde-free aqueous binder composition according to the present invention may be applied to mineral fibres or mineral fibre products by conventional techniques such as, e.g., air or airless spraying, rotating disc atomization, padding, saturating, roll coating, curtain coating, beater deposition, or the like.

The mineral fibres used may be any of man-made vitreous fibres (MMVF), glass fibres, ceramic fibres, basalt fibres, slag wool, rock wool, stone wool and others. The mineral fibre products are, for instance, woven and nonwoven fabrics, mats, batts, slabs, sheets and other shaped articles which find use, for example, as thermal or acoustical insulation materials, vibration damping, construction materials, facade insulation, reinforcing materials for roofing or flooring applications, as filter stock, as horticultural growing media and in other applications.

For the manufacture of conventional thermal or acoustical insulation products, the binder is normally applied in an amount of 0.1 to 15 %, preferably 0.3-10 %, of the bonded mineral fibre product.

In general, the binder composition is applied, normally by spraying, immediately after fiberization of the mineral melt whereupon the coated mineral wool is cured in a curing oven wherein heated air is passed through the mineral wool web to cure the binder. Typically, the curing oven is operated at a temperature of from about 200°C to about 400°C. Preferably, the curing temperature ranges from about 225 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation. If desired, the mineral wool web may also be subjected to a shaping process before curing.

The bonded mineral fibre product emerging from the curing oven in the form of e.g. a batt may be cut to a desired format and, if appropriate, compressed for packaging and shipping. It may also be employed as an intermediate for the manufacture of shaped articles and composite materials.

Although the formaldehyde-free aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the aqueous binder composition and the use thereof as a binder for mineral fibre products. Parts and percentages are by weight, unless indicated otherwise.

In the examples, the following abbreviations are used:

| | |
|---|---|
| DEA: | diethanolamine |
| PTA: | phthalic anhydride |
| THPA: | tetrahydrophthalic anhydride |

### Example 1 - Standard Resin

300 g of DEA is placed in a round bottomed 3-neck glass flask fitted with a mechanical stirrer. This is heated to 60°C, at which point 156 g of THPA is added. Temperature is increased steadily to 90°C at which point 104 g of THPA is added. The reaction mixture is heated to 130°C at which point it is left for 45 minutes under stirring. 162 g of TMA is then added to the reaction mixture and the temperature is maintained for 1 hour. After cooling to 110°C 420 g of water is slowly added, the temperature is maintained at 70°C for one hour, after which the final resin is cooled, isolated, pH is measured and the resin is kept for later use.

### Example 2 - 50% Glycerol (EQ) replacement

75 g of DEA is placed in a round bottomed 3-neck glass flask fitted with a mechanical stirrer and mixed with 66 g of glycerol. This is heated to 60°C, at which point 78,3 g of THPA is added. The temperature is increased steadily to 90°C at which point 52,2 g of THPA is added. The reaction mixture is heated to 130-135°C at which point it is left for 45 minutes under stirring. 81 g of TMA is then added to the reaction mixture and the temperature is maintained for 1 hour. After cooling to 110°C 204 g of water is slowly added, the temperature is maintained at 70°C for one hour, after which the final resin is cooled, isolated, pH is measured and the resin is kept for later use.

### Example 3 -100% Glycerol (EQ) replacement

132 g of glycerol is placed in a round bottomed 3-neck glass flask fitted with a mechanical stirrer. This is heated to 60°C, at which point 78,3 g of THPA is added. The temperature is increased steadily to 90°C at which point 52,2 g of THPA is added. The reaction mixture is heated to 130-135°C at which point it is left for 45 minutes under stirring. 81 g of TMA is then added to the reaction mixture and the temperature is maintained for 1 hour. After cooling to 110°C 192 g of water is slowly added, the temperature is maintained at 70°C for one hour, after which the final resin is cooled, isolated, pH is measured and the resin is kept for later use.

### Example 4 - 50% Glycerol and 50% PTA (EQ) replacement

75 g of DEA is placed in a round bottomed 3-neck glass flask fitted with a mechanical stirrer and mixed with 66 g of glycerol. This is heated to 60°C, at which point 79,5 g of a mixture of 68 g of THPA and 64,5 g of PTA is added. The temperature is increased steadily to 90°C at which point the remaining 53 g of the above mentioned mixture of THPA and PTA is added. The reaction mixture is heated to 130-135°C at which point it is left for 45 minutes under stirring. 81 g of TMA is then added to the reaction mixture and the temperature is maintained for 1 hour. After cooling to 110°C 204 g of water is slowly added, the temperature is maintained at 70°C for one hour, after which the final resin is cooled, isolated, pH is measured and the resin is kept for later use.

### Example 5 - 75% Glycerol and 50% PTA (EQ) replacement

36,6 g of DEA is placed in a round bottomed 3-neck glass flask fitted with a mechanical stirrer and mixed with 97 g of glycerol. This is heated to 60°C, at which point 75,5 g of a mixture of 64,1 g THPA and 61,8 g of PTA is added. The temperature is increased steadily to 90°C at which point the remaining 50,4 g of the above mentioned mixture of THPA and PTA is added. The reaction mixture is heated to 130-135°C at which point it is left for 45 minutes under stirring. 81 g of TMA is then added to the reaction mixture and the temperature is maintained for 1 hour. After cooling to 110°C 200 g of water is slowly added, the temperature is maintained at 70°C for one hour, after which the final resin is cooled, isolated, pH is measured and the resin is kept for later use.

### Example 6 - 65% Glycerol and 65% PTA (EQ) replacement

52 g of DEA is placed in a round bottomed 3-neck glass flask fitted with a mechanical stirrer and mixed with 84,3 g of glycerol. This is heated to 60°C, at which point 76 g of a mixture of 45 g of THPA and 81,6 g of PTA is added. The temperature is increased steadily to 90°C at which point the remaining 50,6 g of the above mentioned mixture of THPA and PTA is added. The reaction mixture is heated to 130-135°C at which point it is left for 90 minutes under stirring. 81 g of TMA is then added to the reaction mixture and the temperature is maintained for 1 hour. After cooling to 110°C 205 g of water is slowly added, the temperature is maintained at 70°C for one hour, after which the final resin is cooled, isolated, pH is measured and the resin is kept for later use.

### Example 7 - 80% Glycerol and 80% PTA (EQ) replacement

29,5 g of DEA is placed in a round bottomed 3-neck glass flask fitted with a mechanical stirrer and mixed with 104 g of glycerol. This is heated to 60°C, at which point 75 g of a mixture of 25,7 g THPA and 100 g PTA is added. The temperature is increased steadily to 90°C at which point the remaining 50,7 g of the above mentioned mixture of THPA and PTA is added. The reaction mixture is heated to 130-135°C at which point it is left for 90 minutes under stirring. 81 g of TMA is then added to the reaction mixture and the temperature is maintained for 1 hour. After cooling to 110°C 200 g of water is slowly added, the temperature is maintained at 70°C for one hour, after which the final resin is cooled, isolated, pH is measured and the resin is kept for later use.

### Example 8 - Ageing Properties

### Procedure for making grit bars

90 ml of an aqueous solution of each of the binders obtained in Examples 1 to 7, adjusted to 15% solids, is mixed with 450 g of shots. Out of the 450 g shot, 8 grit bars are made which are cured at 250°C for 2 hours.

On 4 of the grit bars the 3-point bending strength is measured directly (dry strength), on the other 4 bars after aging of the bars by submersion in 80°C hot water for 3 hours (aged strength)

The results obtained are shown in the following table.

| | Indicative results | Unaged grit bars N/mm² | Aged grit bars N/mm | pH |
|---|---|---|---|---|
| Standard (100% THPA / 100 % DEA) | good | 8.4 | 4.6 | 4.99 |
| 50% Glycerol replacement | good | 5.7 | - | 4.12 |
| 100% Glycerol replacement | inferior | 8.5 | 6.5 | 2.07 |
| 50% PTA/ 50% Glycerol replacement | good | 6.7 | 6.0 | 3.89 |
| 50% PTA/ 75% Glycerol replacement | good | 7.5 | 7.5 | 3.10 |
| 65% PTA/ 65% Glycerol replacement | very good | 7.3 | 6.6 | 3.30 |
| 80% PTA/ 80% Glycerol replacement | very good | 8.7 | 7.2 | 2.90 |

| | | | | |
|---|---|---|---|---|
| Curing at 250°C | | | | |

## Claims

1. An aqueous binder composition for mineral fibres comprising a water-soluble binder component obtainable by
reacting glycerol and at least one alkanolamine with at least one carboxylic anhydride in proportions such that the ratio of equivalents of amine groups plus hydroxy groups (NH+OH) to equivalents of carboxy groups (COOH) in the binder component is within the range of about 0.4 to 2.0, glycerol being used in an amount such that the equivalent ratio of glycerol OH groups to total equivalents of amine groups plus hydroxy groups (NH+OH) is 0.1 to 0.9,
and, optionally, treating the reaction product with a base.

2. The binder composition of claim 1, wherein ratio of equivalents of amine groups plus hydroxy groups (NH+OH) to equivalents of carboxy groups (COOH) in the binder component is within the range of about 0.6 to 1.7, preferably 1.25 to 1.55.

3. The binder composition of claim 1 or 2, wherein glycerol has been used in an amount such that the equivalent ratio of glycerol OH groups to total equivalents of amine groups plus hydroxy groups (NH+OH) is 0.3 to 0.8, preferably 0.5 to 0.8.

4. The binder composition of any one of claims 1 to 3, wherein at least one carboxylic anhydride is selected from cycloaliphatic and/or aromatic anhydrides.

5. The binder composition of claim 4, wherein the carboxylic anhydride comprises a combination of a cycloaliphatic and an aromatic anhydride.

6. The binder composition of 4 or 5, wherein the cycloaliphatic anhydride is selected from tetrahydrophthalic anhydride, hexahydrophthalic anhydride and methyl-tetrahydrophthalic anhydride.

7. The binder composition of any one of claims 4 to 6, wherein the aromatic anhydride is selected from phthalic anhydride, methylphthalic anhydride, trimellitic anhydride and pyromellitic dianhydride.

8. The binder composition of any one of claims 1 to 7, wherein the alkanolamine is selected from diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane.

9. The binder composition of any one of claims 1 to 8, wherein the alkanolamine is diethanolamine.

10. The binder composition of any one of claims 1 to 9, further comprising a curing accelerator and, optionally, other conventional binder additives.

11. The binder composition of claim 10 which comprises phosphinic acid as a curing accelerator.

12. A method of producing a bonded mineral fibre product which comprises the steps of contacting the mineral fibres or mineral fibre product with a binder composition according to any one of claims 1 to 11, and curing the binder composition.

13. The method of claim 12, wherein curing is effected at a curing temperature of from about 225°C to about 300°C.

14. Mineral fibre product comprising mineral fibres in contact with the cured binder composition according to any one of claims 1 to 11.
